# EUROPEAN PATENT SPECIFICATION

(11) **EP 3 187 548 B1**
(45) Date of publication and mention of the grant of the patent: **12.08.2020**
(21) Application number: 15835152.8
(22) Date of filing: 27.08.2015
(51) Int. Cl.: C08L 101/00, C08K 3/00, C08K 3/04, C08K 5/521, C08K 3/013, C08K 3/26, C08K 3/32, C08L 23/28, C08L 23/16, C08L 43/02, C08L 33/12, E06B 3/263, C08L 23/08, C08L 27/04, C08L 27/06, C08L 27/24, E06B 5/16

(54) **RESIN COMPOSITION**
HARZZUSAMMENSETZUNG
COMPOSITION DE RÉSINE

(30) Priority: 27.08.2014 JP 2014172997
(43) Date of publication of application: 05.07.2017
(60) Divisional application: 19204509.4
(73) Proprietor: Sekisui Chemical Co., Ltd., Osaka 530-8565 (JP)
(72) Inventor: SHIMAMOTO, Michio, Hasuda-shi Saitama 349-0198 (JP); YANO, Hideaki, Hasuda-shi Saitama 349-0198 (JP)
(74) Representative: Ter Meer Steinmeister & Partner
(86) International application number: PCT/JP2015/074195
(87) International publication number: WO 2016/031905

(56) References cited:
- WO-A1-2009/028057
- WO-A1-2013/080563
- WO-A1-2013/102208
- WO-A1-2014/057689
- JP-A- H11 323 148
- JP-A- 2001 348 487
- JP-A- 2003 533 575
- JP-A- 2007 162 319
- JP-A- 2008 180 068
- JP-A- 2009 138 184
- JP-A- 2012 017 380
- DATABASE WPI Week 199745 Thomson Scientific, London, GB; AN 1997-486536 XP002778226, & JP H09 227747 A (SEKISUI CHEM IND CO LTD) 2 September 1997 (1997-09-02)
- CULLIS C F ET AL: "The significance of thermoanalytical measurements in the assessment of polymer flammability", POLYMER, ELSEVIER SCIENCE PUBLISHERS B.V, GB, vol. 24, no. 7, 1 July 1983 (1983-07-01), pages 834-840, XP025437399, ISSN: 0032-3861, DOI: 10.1016/0032-3861(83)90200-8 [retrieved on 1983-07-01]

## Description

### Technical Field

The present invention relates to a resin composition that allows the production of a fire-resistant molded product.

### Background Art

Synthetic resins are widely used as building materials because they have good moldability and enable mass production of uniform products. However, since synthetic resins easily melt or burn, generating gas or smoke, materials with a low level of smoke emission and excellent fire resistance have been desired for safety in case of fire. In particular, door or window sashes require a material that is flame-retardant, and that can also retain the shapes of door or window sashes even during fire and prevent fire from reaching outside (back side) the doors or windows.

As a material that meets such a demand, Patent Literature 1 and 2 disclose a chlorinated polyvinyl chloride resin composition exhibiting fire-resistance performance and a low level of smoke emission during combustion. The chlorinated polyvinyl chloride resin composition comprises a chlorinated polyvinyl chloride resin, a phosphorous compound, neutralized thermally expandable graphite, and an inorganic filler. The total amount of the phosphorous compound and the neutralized thermally expandable graphite is 20 to 200 parts by weight, the amount of the inorganic filler is 30 to 500 parts by weight relative to 100 parts by weight of the chlorinated polyvinyl chloride resin, and the neutralized thermally expandable graphite:phosphorous compound weight ratio is 9:1 to 1:9.

Further, Patent Literature 3 discloses a chlorinated polyvinyl chloride resin composition capable of long-time stable extrusion molding of a profile molded product having a complicated cross-sectional shape such as a sash. The chlorinated polyvinyl chloride resin composition comprises 100 parts by weight of a chlorinated polyvinyl chloride resin, 3 to 300 parts by weight of thermally expandable graphite, 3 to 300 parts by weight of an inorganic filler, and 20 to 200 parts by weight of a plasticizer, and does not contain a phosphorus compound (excluding a phosphate plasticizer).
Patent Literature 4 discloses a chlorinated vinyl chloride resin composition for extrusion molding, characterized by: containing 100 parts by weight of a chlorinated vinyl chloride resin, 3 to 300 parts by weight of a thermally expandable graphite, 3 to 200 parts by weight of an inorganic filler and 20 to 200 parts by weight of a plasticizer; and containing no phosphorus compound (excluding phosphate plasticizer).

### Citation List

### Patent Literature

PTL 1: Japanese Unexamined Patent Publication No. H9-227747
PTL 2: Japanese Unexamined Patent Publication No. H10-95887
PTL 3: Japanese Patent No. 53522017
PTL 4: WO 2013/080563 A1

### Summary of Invention

### Technical Problem

Thermally expandable resin compositions were generally considered to have difficulty in attaining both high expansion and high residue hardness after combustion of the resin compositions, because the residue hardness is remarkably reduced when expansion is high. This problem was not discussed in the above literature.

An object of the present invention is to provide a resin composition attaining both high expansion and high residue hardness.

### Solution to Problem

To overcome the above problems, the inventors conducted extensive research. As a result, the inventors surprisingly found that when the expansion starting temperature of thermally expandable graphite is lower than the decomposition starting temperature of a resin component, and when the difference therebetween is large, high expansion and high residue hardness after combustion can be obtained. The present invention has thus been accomplished.

The present invention is defined in the independent claims.

The present disclosure encompasses:
1. A resin composition comprising a resin component in an amount of 100 parts by weight, thermally expandable graphite in an amount of 3 to 300 parts by weight, and an inorganic filler in an amount of 2 to 200 parts by weight, wherein the expansion starting temperature of the thermally expandable graphite is lower than the decomposition starting temperature of the resin component.
2. The resin composition according to Item 1, wherein the expansion starting temperature of the thermally expandable graphite is 15°C or more lower than the decomposition starting temperature of the resin component.
3. The resin composition according to Item 1 or 2, wherein the expansion starting temperature of the thermally expandable graphite is 200°C or less, and the decomposition starting temperature of the resin component exceeds 200°C.
4. (Disclosed but not claimed) The resin composition according to any one of Items 1 to 3, wherein the resin component is a chlorinated vinyl chloride resin or a polyvinyl chloride resin, and the expansion starting temperature of the thermally expandable graphite is 215°C or less; or
   the resin component is at least one member selected from the group consisting of EVA (ethylene-vinyl acetate copolymer resin), EPDM, polybutene, and polybutadiene, and the expansion starting temperature of the thermally expandable graphite is 300°C or less.
5. The resin composition according to any one of Items 1 to 4, comprising no phosphorus compound (excluding a phosphate plasticizer).
6. A fire-resistant member comprising the resin composition according to any one of Items 1 to 5.
7. A fitting comprising the fire-resistant member according to Item 6.

### Advantageous Effects of Invention

The resin composition of the present invention enables long-time stable extrusion molding, in particular, long-time stable extrusion molding of a profile molded product having a complicated cross-sectional shape such as a sash, and has excellent fire resistance because the resulting molded product has high expansion and high residue hardness.

### Brief Description of Drawings

Fig. 1 is a schematic elevation view showing a fire-resistant window in which the molded products of the resin composition of the present invention are provided in a sash frame.
Fig. 2 is a graph showing the relationship between the expansion rate and residue hardness of each sample.

### Description of Embodiments

As used in the specification, the singular forms ("a," "an," and "the") include the plural unless otherwise specified separately, or unless the context clearly dictates otherwise.

The resin composition of the present invention comprises a resin component in an amount of 100 parts by weight, thermally expandable graphite in an amount of 3 to 300 parts by weight, and an inorganic filler in an amount of 2 to 200 parts by weight, in which the expansion starting temperature of the thermally expandable graphite is lower than the decomposition starting temperature of the resin component.

Examples of a resin component include synthetic resins such as thermoplastic resins and thermosetting resins, rubbers, and the like.

The resin component of the present invention is an epoxy resin as defined in the claims. Incidentally, examples of the thermoplastic resins include polyolefin resins such as polypropylene resins, polyethylene resins, poly(1-)butene resins, and polypentene resins; polystyrene resins; acrylonitrile-butadiene-styrene (ABS) resins; polycarbonate resins; polyphenylene ether resins; acrylic resins; polyamide resins; polyvinyl chloride resins; polyisobutylene resins; and the like.

In general, examples of the thermosetting resin include urethane resins, isocyanurate resins, epoxy resins, phenol resins, urea resins, unsaturated polyester resins, alkyd resins, melamine resins, diallyl phthalate resins, silicone resins.

Examples of the rubber include resins of rubbers such as natural rubber, butyl rubber, silicone rubber, polychloroprene rubber, polybutadiene rubber, polyisoprene rubber, polyisobutylene rubber, styrene-butadiene rubber, butadiene-acrylonitrile rubber, nitrile rubber, rubber of ethylene-α olefin copolymer, e.g., an ethylene-propylene-diene copolymer, and the like. However, the claimed invention is limited to the subject matter of the claims.

These synthetic resins and/or rubbers can be used singly, or in a combination of two or more. To adjust the melt viscosity, flexibility, tackiness, etc., of the resin component, two or more resin components can be mixed and used as a base resin.

The resin component may be crosslinked or modified to an extent such that the fire resistance property is not impaired. To perform crosslinking or modification of the resin component, the resin component may be crosslinked or modified in advance, or the resin component may be crosslinked or modified when or after other components such as a phosphorus compound or an inorganic filler described below are incorporated.

The method for crosslinking the resin component is not particularly limited. Examples thereof include crosslinking methods generally employed for the resin component, e.g., crosslinking methods using various crosslinking agents or peroxides, and crosslinking methods using electron beam irradiation.

In one embodiment (that is disclosed but not claimed), the resin component comprises a chlorinated vinyl chloride resin. In another embodiment (that is disclosed but not claimed), the resin component comprises at least one member selected from the group consisting of EPDM, polybutene, and polybutadiene.

The chlorinated vinyl chloride resin (that is disclosed but not claimed)is a chlorinated product of vinyl chloride resin, and is preferably contained in an amount within the range of 60 to 72% by weight because a decrease in the chlorine content reduces heat resistance, and an increase in the chlorine content makes melt extrusion molding difficult.

The vinyl chloride resin (that is disclosed but not claimed) is not particularly limited as long as it is a conventionally known vinyl chloride resin. Examples thereof include a vinyl chloride homopolymer; a copolymer of a vinyl chloride monomer and a monomer having an unsaturated bond copolymerizable with the vinyl chloride monomer; a graft copolymer obtained by graft copolymerization of vinyl chloride with a (co)polymer other than vinyl chloride; and the like. These resins can be used singly, or in a combination of two or more.

The monomer having an unsaturated bond copolymerizable with the vinyl chloride monomer (that is disclosed but not claimed) is not particularly limited as long as it is copolymerizable with a vinyl chloride monomer. Examples thereof include α-olefins such as ethylene, propylene, and butylene; vinyl esters such as vinyl acetate and vinyl propionate; vinyl ethers such as butyl vinyl ether and cetyl vinyl ether; (meth)acrylic acid esters such as methyl(meth)acrylate, ethyl(meth)acrylate, and butyl acrylate; aromatic vinyls such as styrene and α-methylstyrene; N-substituted maleimides such as N-phenyl maleimide and *N*-cyclohexyl maleimide; and the like. These monomers can be used singly, or in a combination of two or more.

The (co)polymer to be graft copolymerized with the vinyl chloride (that is disclosed but not claimed) is not particularly limited as long as it can be graft (co)polymerized with vinyl chloride. Examples thereof include an ethylene-vinyl acetate copolymer, an ethylene-vinyl acetate-carbon monoxide copolymer, an ethylene-ethyl acrylate copolymer, an ethylene-butyl acrylate-carbon monoxide copolymer, an ethylene-methyl methacrylate copolymer, an ethylene-propylene copolymer, an acrylonitrile-butadiene copolymer, polyurethane, chlorinated polyethylene, chlorinated polypropylene, and the like. These (co)polymers can be used singly, or in a combination of two or more.

The average degree of polymerization of the vinyl chloride resin (that is disclosed but not claimed) is not particularly limited, and is preferably 600 to 1500 because a decrease in the average degree of polymerization reduces the mechanical physical properties of the molded product, and an increase in the average degree of polymerization increases the melt viscosity, making melt extrusion molding difficult.

EPDM (disclosed but not claimed)is, for example, a ternary copolymer of ethylene, propylene and a crosslinking diene monomer.

Examples of the crosslinking diene monomer used in EPDM (that is disclosed but not claimed) include, but are not particularly limited, cyclic dienes such as 5-ethylidene-2-norbornene, 5-propylidene-5-norbornene, dicyclopentadiene, 5-vinyl-2-norbornene, 5-methylene-2-norbornene, 5-isopropylidene-2-norbornene, and norbornadiene; chain unconjugated dienes such as 1,4-hexadiene, 4-methyl-1,4-hexadiene, 5-methyl-1,4-hexadiene, 5-methyl-1,5-heptadiene, 6-methyl-1,5-heptadiene, and 6-methyl-1,7-octadiene; and the like.

EPDM (that is disclosed but not claimed) preferably has a Mooney viscosity (ML₁₊₄ 100°C) of 4 to 100, and more preferably 20 to 75.

A Mooney viscosity of 4 or more provides excellent flexibility, and a Mooney viscosity of 100 or less can prevent EPDM (that is disclosed but not claimed) from becoming too hard.

The Mooney viscosity means an EPDM viscosity measured by Mooney viscometer.

EPDM (that is disclosed but not claimed) preferably has a crosslinking diene monomer content of 2.0 to 20% by weight, and more preferably 5.0 to 15% by weight.

A crosslinking diene monomer content of 2.0% by weight or more provides excellent flexibility because of a promoting crosslinking reaction among molecules, and a crosslinking diene monomer content of 20% by weight or less provides excellent weather resistance.

As polybutadiene (which is disclosed but not claimed), commercially available products can be suitably selected and used. Examples thereof include homopolymer-type butadienes such as Kuraprene LBR-305 (produced by Kuraray Co., Ltd.), copolymers of 1,2-bond type butadiene and 1,4-bond type butadiene such as Poly bd (produced by Idemitsu Kosan Co., Ltd.), copolymers of ethylene, 1,4-bond type butadiene, and 1,2-bond type butadiene such as Kuraprene L-SBR-820 (produced by Kuraray Co., Ltd.).

Polybutene (which is disclosed but not claimed) preferably has a weight average molecular weight of 300 to 2000, which is measured in accordance with ASTM D 2503.

When the weight average molecular weight is less than 300, polybutene (which is disclosed but not claimed) tends to exude on the surface of the product after molding because of low viscosity. When the weight average molecular weight exceeds 2000, extrusion molding tends to be difficult because of high viscosity.

Examples of the polybutene (which is disclosed but not claimed) include "100R" and "300R" (weight average molecular weight: 940 and 1450) produced by Idemitsu Sekiyu Kagaku Co., Ltd., "HV-100" (weight average molecular weight: 970) produced by Japan Oil Chemistry Co., Ltd.,"H-100" (weight average molecular weight: 940) produced by Amoco Corporation, and the like.

Regarding the resin component, those obtained by adding at least either of polybutene or polybutadiene to EPDM are preferable to improve the moldability. This is, however, not claimed.

The amount of the at least either of polybutene or polybutadiene (which are disclosed but not claimed) to be added is preferably in the range of 1 to 30 parts by weight, and more preferably 3 to 25 parts by weight relative to 100 parts by weight of resin component.

The thermally expandable graphite is a conventionally known substance that is produced as a graphite intercalation compound by treating a powder of natural flake graphite, thermal decomposition graphite, kish graphite, or the like, with an inorganic acid such as concentrated sulfuric acid, nitric acid, and selenic acid, and a strong oxidant such as concentrated nitric acid, perchloric acid, perchlorate, permanganate, dichromate, and hydrogen peroxide. The thermally expandable graphite is a crystalline compound in which a carbon layer structure is maintained.

As the thermally expandable graphite, thermally expandable graphite obtained by acid treatment may be neutralized with ammonia, lower aliphatic amine, an alkali metal compound, an alkaline earth metal compound, or the like.

Examples of the lower aliphatic amine include monomethyl amine, dimethyl amine, trimethyl amine, ethyl amine, propyl amine, butyl amine, and the like. Examples of the alkali metal compound and the alkaline earth metal compound include a hydroxide, an oxide, a carbonate, a sulfate, an organic acid salt, etc., of potassium, sodium, calcium, barium, magnesium, etc. Specific examples of the thermally expandable graphite may include "CA-60S" produced by Nippon Kasei Chemical Co., Ltd., and the like.

When the particle size of the thermally expandable graphite is too small, the graphite expansion degree becomes small, which reduces foamability. When the particle size of the thermally expandable graphite is too large, the expansion degree becomes large, which is effective; however, dispersibility at the time of mixing with a resin is poor, which reduces moldability, reducing the mechanical physical properties of the resulting extrusion molded product. Accordingly, thermally expandable graphite having a particle size of 20 to 200 meshes is preferable.

When the amount of the thermally expandable graphite to be added is small, fire resistance performance and foamability are reduced. When it is large, extrusion molding becomes difficult and the surface property of the resulting molded product is deteriorated, which reduces mechanical physical properties. Accordingly, the amount of the thermally expandable graphite to be added is 3 to 300 parts by weight relative to 100 parts by weight of the resin component.

The amount of the thermally expandable graphite to be added is preferably within the range of 10 to 200 parts by weight relative to 100 parts by weight of the resin component.

The resin composition of the present invention attains high expansion and high residue hardness after combustion because the expansion starting temperature of the thermally expansion graphite is lower than the decomposition starting temperature of the resin component. The decomposition starting temperature of the resin component indicates a temperature at which the solid resin component starts decomposition, decreasing its weight. Without wishing to be bound by theory, this is apparently because of the following reason. When the resin composition is heated, if the expansion starting temperature of the thermally expandable graphite is lower than the decomposition starting temperature of the resin component, the thermally expandable graphite starts to expand prior to the decomposition of the resin component. Accordingly, a hard heat-insulating layer of the expandable graphite is formed, which delays the decomposition of the resin component, allowing the resin component to be placed to fill in gaps in the heat-insulating layer. Thus, the resin composition of the present invention ensures high expansion and high residue hardness.

For example, when a chlorinated polyvinyl chloride resin or a polyvinyl chloride resin is used as the resin component (, which is disclosed but not claimed), the expansion starting temperature of the thermally expandable graphite is generally 215°C or less. When the resin component is at least one member selected from the group consisting of EVA, EPDM, polybutene, and polybutadiene(, which is disclosed but not claimed), the expansion starting temperature of the thermally expandable graphite is 300°C or less.

In one embodiment, the expansion starting temperature of the thermally expandable graphite is 15°C or more lower than the decomposition starting temperature of the resin component. In another embodiment, the expansion starting temperature of the thermally expandable graphite is 15 to 80°C lower than the decomposition starting temperature of the resin component. In still another embodiment, the expansion starting temperature of the thermally expandable graphite is 200°C or less, and the decomposition starting temperature of the resin component exceeds 200°C. In another embodiment, when the resin composition is heated at a temperature higher than the expansion starting temperature of the thermally expandable graphite and the decomposition starting temperature of the resin component for a time sufficient for expanding the thermally expandable graphite and decomposing the resin component, the expansion rate of the resin composition after heating exceeds 10, and the residue hardness exceeds 0.25 kgf/cm². In particular, when the resin composition is heated at 600°C for 30 minutes, the expansion rate of the resin composition after heating exceeds 10, and the residue hardness exceeds 0.25 kgf/cm². In a more preferable embodiment, the residue hardness is 0.3 kgf/cm² or more to 2 kgf/cm² or less. In an even more preferable embodiment, the residue hardness is 0.5 kgf/cm² or more to 2 kgf/cm² or less. The expansion rate is calculated as (the thickness of the resin composition specimen after heating)/(the thickness of the resin composition specimen before heating). The residue hardness is calculated by compressing the specimen after heating using a known compression tester, and measuring the stress at a break point. In this application, the residue hardness is obtained by compressing the specimen using a compression tester with an indenter of 0.25 cm² at a speed of 0.1 cm/s, and then measuring the stress at a break point.

The inorganic filler is not particularly limited as long as it is an inorganic filler generally used for producing vinyl chloride resin molded products (which are disclosed but not claimed). Examples thereof include silica, diatomite, alumina, zinc oxide, titanium oxide, calcium oxide, magnesium oxide, iron oxide, tin oxide, antimony oxide, ferrite, calcium hydroxide, magnesium hydroxide, aluminum hydroxide, basic magnesium carbonate, calcium carbonate, magnesium carbonate, zinc carbonate, barium carbonate, dawsonite, hydrotalcite, calcium sulfate, barium sulfate, gypsum fibers, calcium silicate, talc, clay, mica, montmorillonite, bentonite, activated clay, sepiolite, imogolite, sericite, glass fibers, glass beads, silica balloons, aluminum nitride, boron nitride, silicon nitride, carbon black, graphite, carbon fibers, carbon balloons, charcoal powder, various metal powders, potassium titanate, magnesium sulfate, lead zirconia titanate, aluminum borate, molybdenum sulfide, silicon carbide, stainless fibers, zinc borate, various magnetic powders, slag fibers, fly ash, dewatered sludge, and the like. Calcium carbonate and hydrous inorganic compounds such as calcium hydroxide, magnesium hydroxide, and aluminum hydroxide, which are dehydrated during heating and have an endothermic effect, are preferable. Further, antimony oxide is preferable since it has an effect of improving flame retardancy. These inorganic fillers can be used singly, or in a combination of two or more.

When the amount of the inorganic filler to be added is small, the fire resistance performance is reduced; while when it is large, extrusion molding becomes difficult and the surface property of the resulting molded product is deteriorated, which reduces mechanical physical properties. Accordingly, the amount of the inorganic filler to be added is 3 to 200 parts by weight relative to 100 parts by weight of the resin component.

The amount of the inorganic filler to be added is preferably within the range of 10 to 150 parts by weight relative to 100 parts by weight of the resin component.

As described above, the resin composition of the present invention contains a resin component, thermally expandable graphite, and an inorganic filler; however, when a phosphorus compound (excluding a phosphate plasticizer) is contained, the extrusion moldability is reduced. Therefore, a phosphorus compound (excluding phosphate plasticizer) is preferably not contained. A phosphate plasticizer, which is a plasticizer described below, can be contained.

A phosphorus compound inhibiting extrusion moldability is as follows.

Red phosphorus; various phosphates such as triphenyl phosphate, tricresyl phosphate, trixylenyl phosphate, cresyl diphenylphosphate, and xylenyl diphenylphosphate; metal salts of phosphoric acids such as sodium phosphate, potassium phosphate, and magnesium phosphate; ammonium polyphosphates; compounds represented by formula (1) below; and the like.

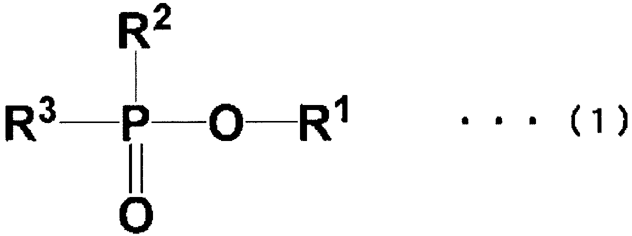

In the formula, R¹ and R³ represents hydrogen, a linear or branched alkyl group having 1 to 16 carbon atoms, or an aryl group having 6 to 16 carbon atoms. R² represents a hydroxyl group, a linear or branched alkyl group having 1 to 16 carbon atoms, a linear or branched alkoxyl group having 1 to 16 carbon atoms, an aryl group having 6 to 16 carbon atoms, or an aryloxy group having 6 to 16 carbon atoms.

Examples of the compound represented by formula (1) include methylphosphonic acid, dimethyl methylphosphate, diethyl methylphosphate, ethylphosphonic acid, propylphosphonic acid, butylphosphonic acid, 2-methylpropylphosphonic acid, *t-*butylphosphonic acid, 2,3-dimethyl-butylphosphonic acid, octylphosphonic acid, phenylphosphonic acid, dioctylphenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, bis(4-methoxyphenyl)phosphinic acid, and the like.

Examples of the ammonium polyphosphate include, but are not particularly limited to, ammonium polyphosphate, melamine-modified ammonium polyphosphate, and the like.

In the present invention, these phosphorus compounds inhibiting extrusion moldability are not used.

The resin composition may further comprise a plasticizer. In one embodiment (that is disclosed but not claimed), when a vinyl chloride resin is used as a resin component, the resin composition comprises a plasticizer.

The plasticizer is not particularly limited as long as it can be generally used for the production of vinyl chloride resin molded products (that is disclosed but not claimed). Examples thereof include phthalate plasticizers such as di-2-ethylhexyl phthalate (DOP), dibutyl phthalate (DBP), diheptyl phthalate (DHP), and diisodecyl phthalate (DIDP); fatty acid ester plasticizers such as di-2-ethylhexyl adipate (DOA), diisobutyl adipate (DIBA), and dibutyl adipate (DBA); epoxidized ester plasticizers such as epoxidized soy bean oil; polyester plasticizers such as adipic acid ester and adipic acid polyester; trimellitate plasticizers such as tri-2-ethylhexyl trimellitate (TOTM) and triisononyl trimellitate (TINTM); and phosphate plasticizers such as trimethyl phosphate (TMP) and triethyl phosphate (TEP). These plasticizers can be used singly, or in a combination of two or more.

When the amount of the plasticizer to be added is small, the extrusion moldability is reduced; while when it is large, the resulting molded product becomes too soft. Accordingly, the amount of the plasticizer to be added is 20 to 200 parts by weight relative to 100 parts by weight of the resin component.

The resin composition of the present invention may optionally include, within a range not impairing its physical properties, a heat stabilizer, a lubricant, a process aid, a thermally decomposing foaming agent, an antioxidant, an antistatic agent, a pigment, and the like, which are generally used for the thermal molding of a vinyl chloride resin composition (that is disclosed but not claimed), other than a phosphorus compound.

Examples of the heat stabilizer include lead heat stabilizers such as tribasic lead sulfate, tribasic lead sulfite, dibasic lead phosphite, lead stearate, and dibasic lead stearate; organic tin heat stabilizers such as organic tin mercapto, organic tin malate, organic tin laurate, and dibutyl tin malate; metal soap heat stabilizers such as zinc stearate and calcium stearate; and the like. These heat stabilizers can be used singly, or in a combination of two or more.

Examples of the lubricant include waxes such as polyethylene, paraffin, and montanic acid; various ester waxes; organic acids such as stearic acid and ricinoleic acid; organic alcohols such as stearyl alcohol; amido compounds such as dimethyl bisamide; and the like. These lubricants can be used singly, or in a combination of two or more.

Examples of the process aid include chlorinated polyethylene, methyl methacrylate-ethyl acrylate copolymer, high-molecular-weight poly(methyl methacrylate), and the like.

Examples of the thermally decomposing foaming agent include azodicarbonamide (ADCA), dinitrosopentamethylenetetramine (DPT), *p,p*-oxybis(benzenesulfonyl hydrazide) (OBSH), azobisisobutyronitrile (AIBN), and the like.

The resin composition of the present invention can produce a long molded product by melt extrusion at 130 to 170°C using an extruder such as a single-screw extruder and a twinscrew extruder, in accordance with a conventional method. The resin composition of the present invention is used for imparting fire resistance to fittings such as windows, *shoji* [paper sliding doors], doors, sliding doors, *fusuma* [Japanese sliding screens], and *ramma* [transoms]; ships; elevator structures; and the like. In particular, since the resin composition of the present invention has excellent moldability, a long-profile molded product having a complicated cross-sectional shape can be easily obtained.

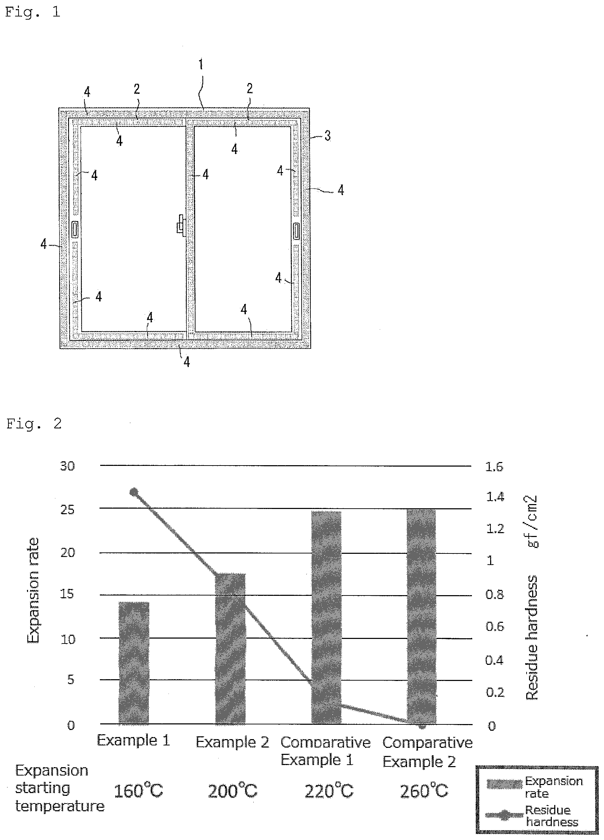

Accordingly, the present invention includes a fire-resistant member such as a molded product comprising the resin composition of the present invention, and a fitting comprising the fire-resistant member. For example, Fig. 1 is a schematic view showing the sash frame of window 1, which is a fitting, in which molded products 4 formed of the resin composition of the present invention are provided. In this example, the sash frame comprises two inner frames 2 and one outer frame 3 surrounding two inner frames 2, and molded products 4 are provided inside inner frames 2 and outer frame 3 along each side of inner frames 2 and outer frame 3. By providing molded products 4 in this manner, fire resistance can be imparted to window 1.

### Examples

With reference to the figures, the present invention is explained in detail by Examples.

### Examples 1 and 2 (not according to the claimed invention), and Comparative Examples 1 and 2

A mixture comprising a chlorinated vinyl chloride resin ("HA-53F" produced by Tokuyama Sekisui Co., Ltd., polymerization degree: 1000, chlorine content: 64.0% by weight, decomposition starting temperature: 230°C, hereinafter referred to as "CPVC"), neutralized thermally expandable graphite, calcium carbonate ("WHITON BF300" produced by Shiraishi Calcium Kaisha, Ltd.), antimony trioxide ("PATOX-C" produced by Nihon Seiko Co., Ltd.), diisodecyl phthalate ("DIDP" produced by J-PLUS Co., Ltd., hereinafter referred to as "DIDP"), a Ca-Zn composite stabilizer ("NT-231" produced by Mizusawa Industrial Chemicals, Ltd.), calcium stearate ("SC-100" produced by Sakai Chemical Industry Co., Ltd.), chlorinated polyethylene ("135A" produced by Weihai Jinhong Chemical Industry Co., Ltd.), and polymethyl methacrylate ("P-530A" produced by Mitsubishi Rayon Co., Ltd.) in amounts shown in Table 1, was supplied to a single-screw extruder (a 65-mm extruder produced by Ikegai Corp.), and subjected to extrusion molding at a rate of 1 m/hr for 2 hours to produce a long-profile molded product whose cross-sectional shape at 150°C is an E shape (a shape having a base with a width of 100 mm and a thickness of 3.0 mm, and three side walls that are each set perpendicular to the base and at a 50-mm distance from each other on both ends of the base and in middle of the base, and each has a thickness of 2.0 mm).

As thermally expandable graphite, "ADT501" (expansion starting temperature: 160°C) produced by ADT Co., Limited, "ADT351" (expansion starting temperature: 200°C) produced by ADT Co., Limited, "GREP-EG" (expansion starting temperature: 220°C) produced by Tosoh Corporation, and "MZ160" (expansion starting temperature: 260°C) produced by Air Water Inc. were used in Examples 1 and 2, and Comparative Examples 1 and 2, respectively.

### Moldability

In all of Examples 1 and 2, and Comparative Examples 1 and 2, a long-profile molded product having a fine surface was obtained by 2-hour extrusion molding. After 2-hour extrusion molding, the mixture was not attached to the screw and mold, attaining excellent moldability.

### Expansion Rate

A specimen (length: 100 mm, width: 100 mm, thickness: 2.0 mm) prepared from the resulting molded product was placed in an electric furnace, and heated at 600°C for 30 minutes. The thickness of the specimen was measured, and (the thickness of the specimen after heating)/(the thickness of the specimen before heating) was calculated as the expansion rate.

### Residue Hardness

The heated specimen after the measurement of expansion rate was placed in a compression tester ("Finger-Feeling Tester" produced by Kato Tech Co., Ltd.), and compressed with an indenter of 0.25 cm² at a speed of 0.1 cm/s to measure the stress at a break point.

The measurement results of the expansion rate and residue hardness of the resulting molded product are as shown in Fig. 2. In Examples 1 and 2 in which the expansion starting temperature of the thermally expandable graphite was lower than the decomposition starting temperature of the resin component, a relatively high expansion rate and high residue hardness were maintained. However, in Comparative Examples 1 and 2 in which the expansion starting temperature of the thermally expandable graphite was higher than the decomposition starting temperature of the resin component, the residue hardness was drastically reduced.

### Residue Shape Retention

The residue hardness is an indicator of the hardness of the residue after expansion. However, the measurement is performed only on the front surface part of the residue; therefore, it may not be an indicator of the hardness of the entire residue. Accordingly, the residue shape retention was measured as an indicator of the hardness of the entire residue. For the residue shape retention, both ends of the specimen after the measurement of expansion rate were lifted by hand, and the brittleness of the residue during lifting was measured visually. A case where the specimen was lifted without collapsing was evaluated as PASS, and a case where the specimen was collapsed and not lifted was evaluated as FAIL.

**Table 1**

| | | | Example 1 | Example 2 | Comparative Example 1 | Comparative Example 2 |
|---|---|---|---|---|---|---|
| Mixture | CPVC | | 100 | 100 | 100 | 100 |
| | Thermally expandable graphite | ADT501 | 75 | | | |
| | | ADT351 | | 75 | | |
| | | GREP-EG | | | 75 | |
| | | MZ-160 | | | | 75 |
| | Calcium carbonate | | 27 | 27 | 27 | 27 |
| | Antimony trioxide | | 10 | 10 | 10 | 10 |
| | DIDP | | 97 | 97 | 97 | 97 |
| | Ca-Zn composite stabilizer | | 3 | 3 | 3 | 3 |
| | Calcium stearate | | 4.5 | 4.5 | 4.5 | 4.5 |
| | Chlorinated polyethylene | | 10 | 10 | 10 | 10 |
| | Polymethyl methacrylate | | 20 | 20 | 20 | 20 |
| Residue shape retention | | | PASS | PASS | FAIL | FAIL |

### Examples 3 to 22

Each of the mixtures containing components shown in Table 2 was introduced into a single-screw extruder in the same manner as described in Examples 1 and 2, and Comparative Examples 1 and 2, and a long-profile molded product having an E cross-sectional shape was obtained by 2-hour extrusion molding at 150°C at a speed of 1 m/hr.

As a resin component, CPVC in Examples 3 to 6 (not according to the claimed invention), a polyvinyl chloride resin (polymerization degree of 1000, decomposition starting temperature of 215°C, referred to as "PVC") in Examples 7 to 10 (not according to the claimed invention), an ethylene-vinyl acetate copolymer resin (decomposition starting temperature of 225°C, referred to as "EVA") in Examples 11 to 15 (not according to the claimed invention), ethylene-propylene-diene rubber (decomposition starting temperature of 230°C, referred to as "EPDM") in Examples 16 to 20 (not according to the claimed invention), and an epoxy resin (decomposition starting temperature of 275°C, referred to as "epoxy") in Examples 21 and 22 were used.

"AP422" produced by Clariant and "Diana Process Oil PW-90" produced by Idemitsu Kosan Co., Ltd. were used as ammonium polyphosphate and a softener, respectively.

### Moldability

In all of Examples 3 to 22, a long-profile molded product having a fine surface was obtained by 2-hour extrusion molding. After 2-hour extrusion molding, the mixture was not attached to the screw and mold, attaining excellent moldability.

### Expansion Rate

A specimen (length: 100 mm, width: 100 mm, thickness: 2.0 mm) prepared from the resulting molded product was placed in an electric furnace, and heated at 600°C for 30 minutes. The thickness of the specimen was measured, and (the thickness of the specimen after heating)/(the thickness of the specimen before heating) was calculated as the expansion rate.

### Residue Hardness

The heated specimen after the measurement of expansion rate was placed in a compression tester ("Finger-Feeling Tester" produced by Kato Tech Co., Ltd.), and compressed with an indenter of 0.25 cm² at a speed of 0.1 cm/s to measure the stress at a break point.

All of the molded products of Examples 3 to 22 maintained a relatively high expansion rate and high residue hardness, as in Examples 1 and 2 (data not shown).

### Residue Shape Retention

The residue hardness is an indicator of the hardness of the residue after expansion. However, the measurement is performed only on the front surface part of the residue; therefore, it may not be an indicator of the hardness of the entire residue. Accordingly, the residue shape retention was measured as an indicator of the hardness of the entire residue. For the residue shape retention, both ends of the heated specimen after the measurement of expansion rate were lifted by hand, and the brittleness of the residue during lifting was measured visually. A case where the specimen was lifted without collapsing was evaluated as PASS, and a case where the specimen was collapsed and not lifted was evaluated as FAIL.

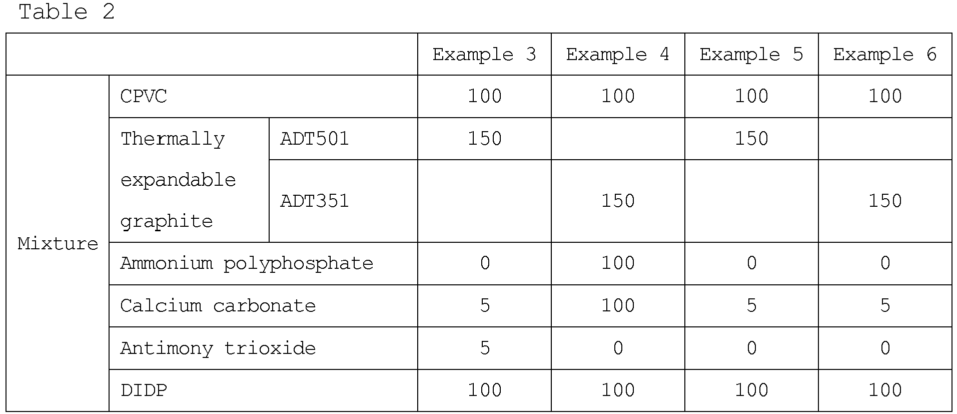

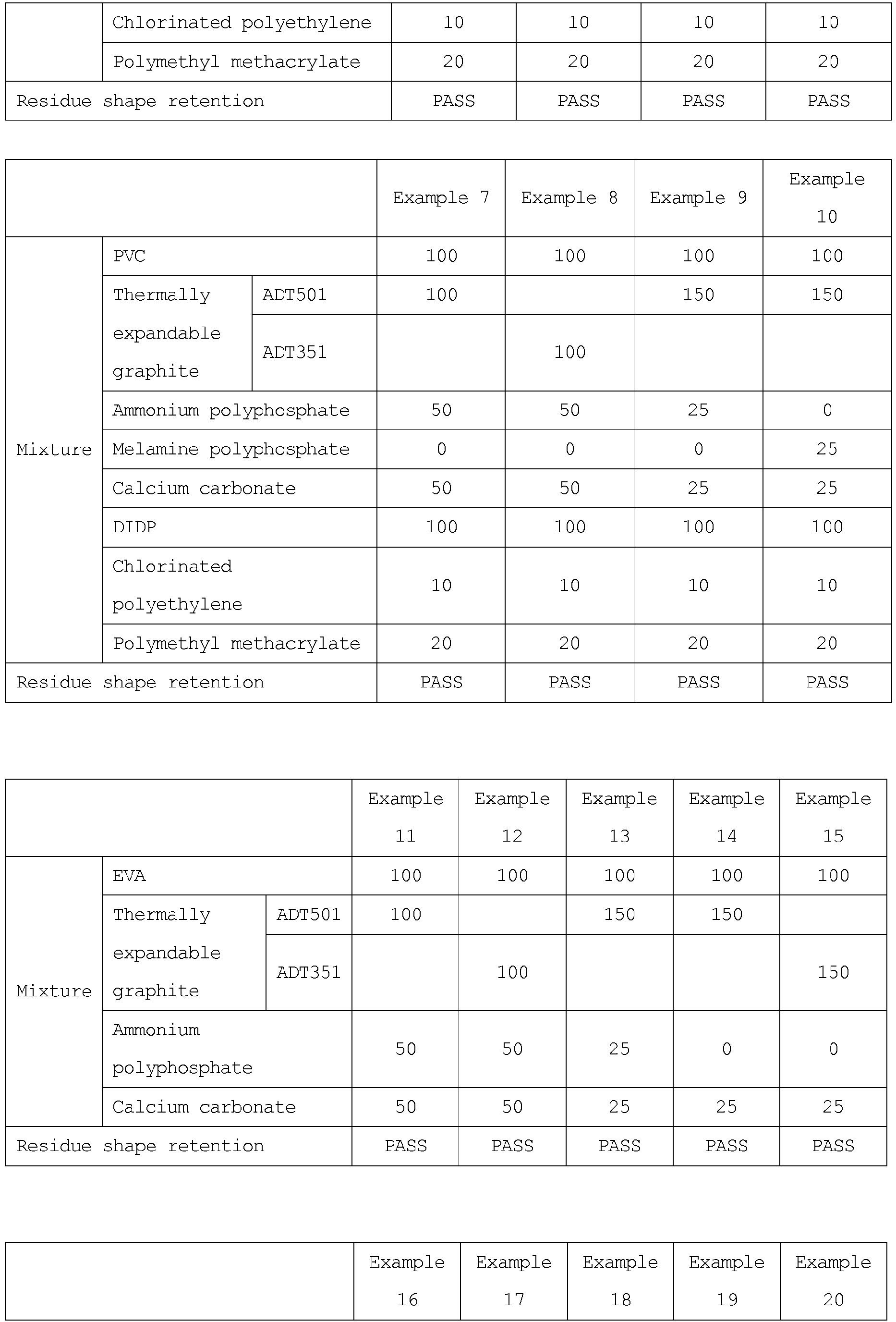

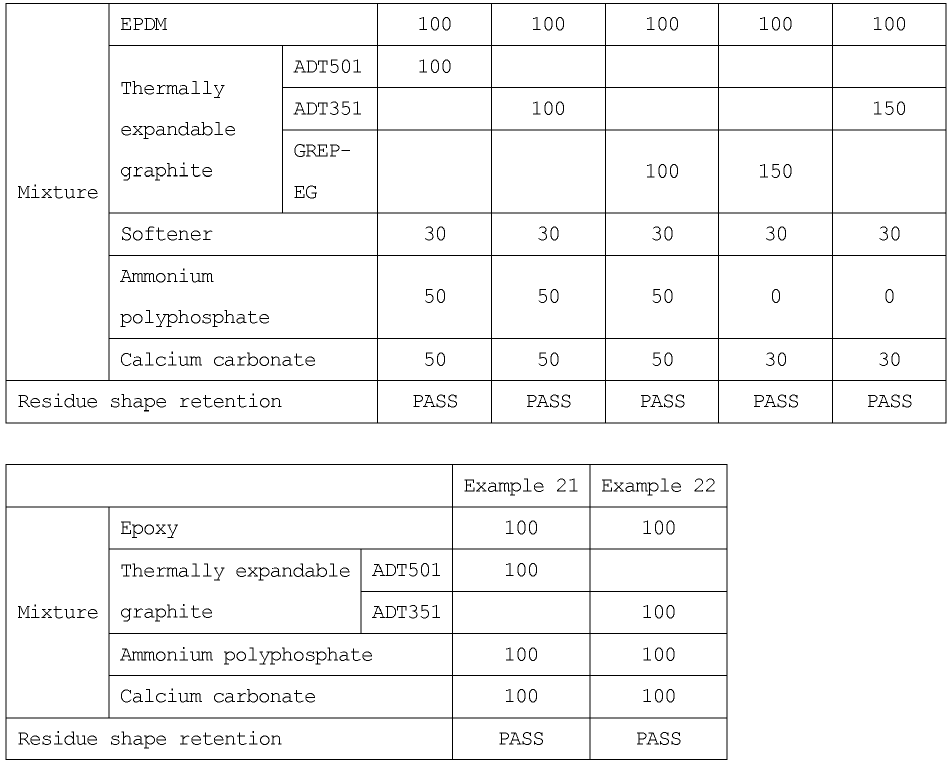

## Claims

1. A resin composition comprising a resin component in an amount of 100 parts by weight, thermally expandable graphite in an amount of 3 to 300 parts by weight, and an inorganic filler in an amount of 2 to 200 parts by weight,
wherein the resin component is epoxy resin, the expansion starting temperature of the thermally expandable graphite is lower than the decomposition starting temperature of the resin component, the expansion starting temperature of the thermally expandable graphite is 200°C or less, and the decomposition starting temperature of the resin component exceeds 200°C.

2. The resin composition according to claim 1, comprising no phosphorus compound (excluding a phosphate plasticizer).

3. A fire-resistant member comprising the resin composition according to claim 1 or 2.

4. A fitting comprising the fire-resistant member according to claim 3.

## Patentansprüche

1. Harzzusammensetzung, umfassend eine Harzkomponente in einer Menge von 100 Gewichtsteilen, thermisch expandierbaren Graphit in einer Menge von 3 bis 300 Gewichtsteilen und einen anorganischen Füllstoff in einer Menge von 2 bis 200 Gewichtsteilen, wobei die Harzkomponente Epoxyharz ist, die Expansions-Starttemperatur des thermisch expandierbaren Graphits niedriger ist als die Zersetzungs-Starttemperatur der Harzkomponente, wobei die Expansions-Starttemperatur des thermisch expandierbaren Graphits 200 °C oder weniger beträgt, und die Zersetzungs-Starttemperatur der Harzkomponente 200 °C überschreitet.

2. Harzzusammensetzung nach Anspruch 1, umfassend keine Phosphorverbindung (ausgenommen einen Phosphat-Weichmacher).

3. Feuerbeständiges Element, umfassend die Harzzusammensetzung nach Anspruch 1 oder 2.

4. Fitting, umfassend das feuerbeständige Element nach Anspruch 3.

## Revendications

1. Composition à base de résine comprenant un composant résineux en une quantité de 100 parties en poids, du graphite thermiquement expansible en une quantité de 3 à 300 parties en poids et une charge inorganique en une quantité de 2 à 200 parties en poids, le composant résineux étant une résine époxy, la température de départ d'expansion du graphite thermiquement expansible étant inférieure à la température de départ de décomposition du composant résineux, la température de départ d'expansion du graphite thermiquement expansible étant de 200 °C ou moins, et la température de départ de décomposition du composant résineux dépassant 200 °C.

2. Composition à base de résine selon la revendication 1, ne comprenant aucun composé phosphoré (à l'exclusion d'un plastifiant phosphate).

3. Élément résistant au feu comprenant la composition à base de résine selon la revendication 1 ou 2.

4. Installation comprenant l'élément résistant au feu selon la revendication 3.
